(19) Europäisches Patentamt
European Patent Office
Office européen des brevets

(11) **EP 4 083 844 A1**

(12) **EUROPEAN PATENT APPLICATION**
published in accordance with Art. 153(4) EPC

(43) Date of publication:
**02.11.2022 Bulletin 2022/44**

(21) Application number: **20907170.3**

(22) Date of filing: **19.11.2020**

(51) International Patent Classification (IPC):
***G06F 30/20*** (2020.01)

(52) Cooperative Patent Classification (CPC):
**G06F 30/20**

(86) International application number:
**PCT/JP2020/043097**

(87) International publication number:
**WO 2021/131425 (01.07.2021 Gazette 2021/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.12.2019 JP 2019230997
13.10.2020 JP 2020172750**

(71) Applicant: **Panasonic Intellectual Property
Management Co., Ltd.
Osaka-shi, Osaka 540-6207 (JP)**

(72) Inventor: **TAKYANAGI, Tetsuya
Osaka-shi, Osaka 540-6207 (JP)**

(74) Representative: **Eisenführ Speiser
Patentanwälte Rechtsanwälte PartGmbB
Postfach 10 60 78
28060 Bremen (DE)**

(54) **INFORMATION PROCESSING DEVICE, INFORMATION PROCESSING SYSTEM, AND INFORMATION PROCESSING METHOD**

(57) A server device (120) includes: an acquiring unit (121) that acquires a first flow-velocity distribution and a second flow-velocity distribution, calculated by using different boundary conditions, of a fluid within a predetermined space; a comparing unit (122) that compares a difference value between a first flow-velocity vector included in the first flow-velocity distribution and a second flow-velocity vector included in the second flow-velocity distribution with a predetermined threshold value with respect to each of regions within the predetermined space; and a generating unit (123) that generates and outputs at least one of first flow information and second flow information based on the first flow-velocity distribution and the second flow-velocity distribution if the difference value is larger than or equal to the predetermined threshold value with respect to each of the regions within the predetermined space.

FIG. 1

EP 4 083 844 A1

## Description

Technical Field

The present disclosure relates to information processing devices, information processing systems, and information processing methods that output numerical fluid analysis results calculated by using different boundary conditions.

Background Art

In recent years, with the development of arithmetic devices, such as CPUs (central processing units) and GPUs (graphics processing units), airflow analysis methods and monitoring methods using computer simulations are drawing attention.

For example, in Patent Literature 1, a three-dimensional airflow analysis is performed in a computer by using data from a sensor installed in a room as input data. Then, the result of the airflow analysis is displayed on a monitor, so that the air-conditioning environment can be monitored in real time.

In Patent Literature 2, temperature and airflow simulations are performed based on various types of boundary conditions, such as openings and ventilators in a building. Then, a simulation result (current plan) according to a specific boundary condition and a simulation result (suggested plan) according to another boundary condition are displayed in a comparable manner. In detail, a predicted mean vote (PMV) is displayed in a table format in a comparable manner between the two plans.

Citation List

Patent Literature

PTL 1: Japanese Unexamined Patent Application Publication No. 2012-63055
PTL 2: Japanese Unexamined Patent Application Publication No. 2013-3697

Summary of Invention

However, although it is possible to display a single indicator, such as the predicted mean vote, in a comparable manner between the two plans on a room-by-room basis in the technology in the related art, it is not possible to display a change in local airflow within a single room in an intuitively comprehensible manner.

The present disclosure provides an information processing device, an information processing system, and an information processing method that can output, in an intuitively comprehensible manner, a change in local flow within a predetermined space in fluid analysis results calculated by using different boundary conditions.

An information processing device according to an aspect of the present disclosure includes: an acquiring unit that acquires a first flow-velocity distribution and a second flow-velocity distribution, calculated by using different boundary conditions, of a fluid within a predetermined space; a comparing unit that compares a difference value between a first flow-velocity vector included in the first flow-velocity distribution and a second flow-velocity vector included in the second flow-velocity distribution with a first predetermined threshold value with respect to each of regions within the predetermined space; and a generating unit that generates and outputs at least one of first flow information and second flow information based on the first flow-velocity distribution and the second flow-velocity distribution if the difference value is larger than or equal to the first predetermined threshold value with respect to each of the regions within the predetermined space.

General or specific aspects may be implemented as a system, a method, an integrated circuit, a computer program, or a computer-readable storage medium, or may be implemented as a freely-chosen combination of a device, a system, a method, an integrated circuit, a computer program, and a storage medium. The computer-readable storage medium may include a nonvolatile storage medium, such as a CD-ROM (compact discread only memory).

With the information processing device according to the aspect of the present disclosure, a change in local flow within a predetermined space in fluid analysis results calculated by using different boundary conditions can be output in an intuitively comprehensible manner. Additional benefits and advantages according to the aspect of the present disclosure will become apparent from the description and the drawings. The benefits and/or advantages may be individually obtained by the various embodiments and features of the specification and drawings, which need not all be provided in order to obtain one or more of such benefits and/or advantages.

Brief Description of Drawings

[Fig. 1] Fig. 1 is a block diagram illustrating an example of the configuration of an information processing system according to an embodiment.
[Fig. 2] Fig. 2 is a sequence diagram illustrating information processing according to the embodiment.
[Fig. 3] Fig. 3 illustrates an example of a condition input screen according to the embodiment.
[Fig. 4] Fig. 4 illustrates an example of the condition input screen according to the embodiment.
[Fig. 5] Fig. 5 illustrates an example of display of a calculation completion notification according to the embodiment.
[Fig. 6] Fig. 6 illustrates an example of a visualization request screen according to the embodiment.

[Fig. 7] Fig. 7 illustrates an example of display of a first flow-velocity distribution according to the embodiment.

[Fig. 8] Fig. 8 illustrates an example of display of a second flow-velocity distribution according to the embodiment.

[Fig. 9] Fig. 9 illustrates an example of display of flow-velocity distributions in a comparison mode according to the embodiment.

[Fig. 10] Fig. 10 illustrates an example of display of flow-velocity distributions in the comparison mode according to a first modification.

[Fig. 11] Fig. 11 illustrates an example of display of flow information and region information in the comparison mode according to a second modification.

[Fig. 12] Fig. 12 illustrates an example of the visualization request screen according to a fourth modification.

Description of Embodiments

Embodiments will be described below by using the drawings.

The embodiments to be described below each indicate a general or specific example. Numerical values, shapes, materials, components, positions and connection methods of the components, steps, and the sequence of the steps indicated in the following embodiments are examples and are not intended to limit the scope of the claims.

Furthermore, the drawings are not necessarily exact illustrations. In each drawing, same reference signs are given to substantially identical components, and redundant descriptions will be omitted or simplified.

(Embodiment)

[1. Configuration of Information Processing System 100]

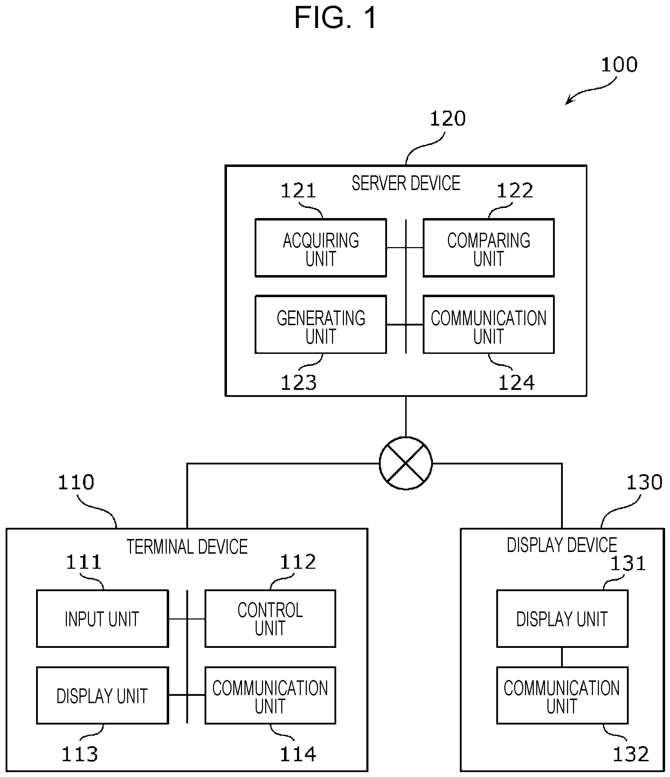

Fig. 1 is a block diagram illustrating an example of the configuration of an information processing system 100 according to an embodiment. The information processing system 100 according to this embodiment displays, in an intuitively comprehensible manner, a change in local flow within a predetermined space in fluid analysis results calculated by using different boundary conditions. As illustrated in Fig. 1, the information processing system 100 includes a terminal device 110, a server device 120, and a display device 130 that are connected to one another via a communication network.

The predetermined space is a space in which a fluid that is to undergo a fluid analysis exists. In this embodiment, the predetermined space used is a room inside a residential home in which air exists, but is not limited thereto.

The boundary conditions for the fluid analysis are input information about a numerical analysis of the flow of the fluid within the predetermined space. In detail, the boundary conditions include, for example, the shape, size, and position of an object (e.g., furniture or an air-conditioning device) disposed within the predetermined space, and the position and state of an opening of the predetermined space.

[1.1. Configuration of Terminal Device 110]

The terminal device 110 is, for example, a smartphone or tablet computer having a touch-sensitive display. Alternatively, for example, the terminal device 110 may be a desktop computer or laptop computer having an input device (e.g., a mouse and a keyboard) and a display.

As illustrated in Fig. 1, the terminal device 110 includes an input unit 111, a control unit 112, a display unit 113, and a communication unit 114. The components included in the terminal device 110 will be described below.

The input unit 111 is an input device for receiving input from a user. For example, the input unit 111 receives, from the user, input of different boundary conditions to be used individually in the fluid analysis within the predetermined space. The input unit 111 used may be, for example, a touch-sensitive panel (i.e., a touchscreen) integrated with a display, a mouse, a keyboard, or a freely-chosen combination thereof, but is not limited thereto.

The control unit 112 controls the input unit 111, the display unit 113, and the communication unit 114. The control unit 112 used may be, for example, a processor (not illustrated) and a memory (not illustrated) having instructions stored therein. Alternatively, the control unit 112 used may be a dedicated electronic circuit.

The display unit 113 displays various types of information. For example, the display unit 113 displays a graphical user interface (GUI) used for inputting the boundary conditions. The display unit 113 used may be, for example, a liquid crystal display and/or an organic EL display, but is not limited thereto.

The communication unit 114 transmits information to the server device 120 and/or the display device 130 and receives information from the server device 120 and/or the display device 130 via the communication network. The communication unit 114 used may be, for example, a wired communication circuit and/or a wireless communication circuit, but is not limited thereto.

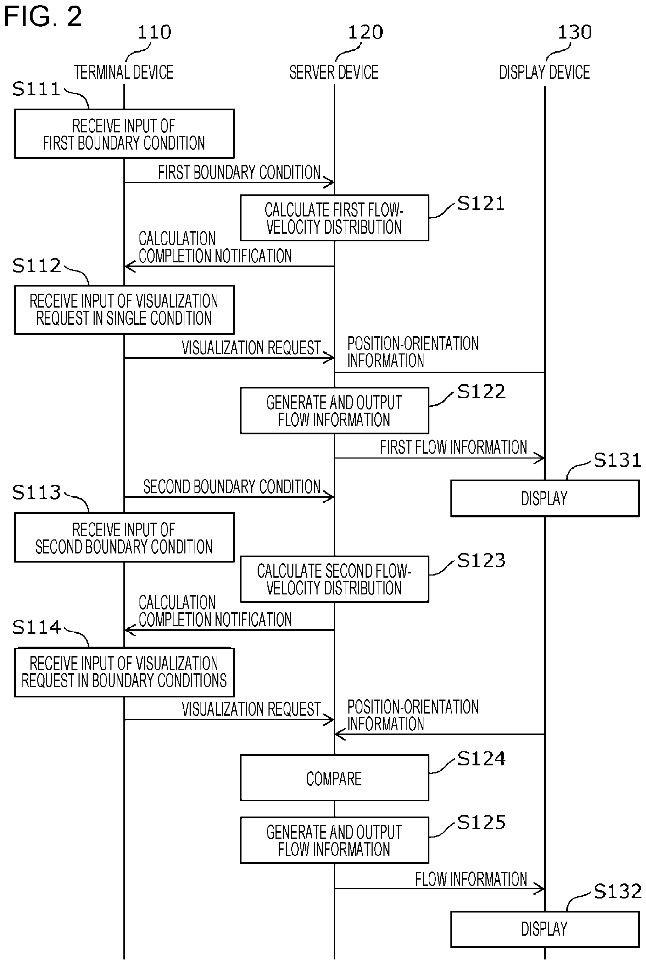

The terminal device 110 may be realized by using software processing. In this case, when the processor executes software stored in a transitory storage medium (e.g., a memory), the processor and a peripheral device implement the function of the terminal device 110. For example, when the processor executes the software stored in the transitory storage medium, the processor and the peripheral device perform processing related to the terminal device 110 including a process from step S111 to step S114 described in Fig. 2.

[1.2. Configuration of Server Device 120]

The server device 120 is an example of an information processing device. The server device 120 used may be, for example, a cloud server. Alternatively, the server device 120 used may be an edge server, a home server, a workstation, or a freely-chosen combination thereof.

As illustrated in Fig. 1, the server device 120 includes an acquiring unit 121, a comparing unit 122, a generating unit 123, and a communication unit 124. The components included in the server device 120 will be described below.

The acquiring unit 121 acquires a first flow-velocity distribution and a second flow-velocity distribution, calculated by using the different boundary conditions, of the fluid in the predetermined space. In detail, for example, the acquiring unit 121 performs a numerical fluid analysis by using a first boundary condition for the predetermined space, so as to acquire the first flow-velocity distribution of the fluid within the predetermined space. For example, the acquiring unit 121 performs a numerical fluid analysis by using a second boundary condition, different from the first boundary condition, for the predetermined space, so as to acquire the second flow-velocity distribution of the fluid within the predetermined space. The numerical fluid analysis does not necessarily have to be performed by the acquiring unit 121. In this case, the acquiring unit 121 may acquire the analysis results, that is, the aforementioned first flow-velocity distribution and the second flow-velocity distribution, from an external device.

The comparing unit 122 compares a difference value between a first flow-velocity vector included in the first flow-velocity distribution and a second flow-velocity vector included in the second flow-velocity distribution with a predetermined threshold value with respect to each of regions within the predetermined space. In detail, the comparing unit 122 first acquires the first flow-velocity vector and the second flow-velocity vector for each region within the predetermined space. Then, the comparing unit 122 calculates the difference value between the acquired first flow-velocity vector and the acquired second flow-velocity vector for each region within the predetermined space, and compares the calculated difference value with the predetermined threshold value.

The regions are regions obtained by imaginarily dividing the predetermined space. The regions used may be a mesh used in the fluid analysis, but is not limited thereto.

The predetermined threshold value is an example of a first predetermined threshold value and is a value used for determining that the degree of difference between the first flow-velocity vector and the second flow-velocity vector is high or that the degree of similarity between the first flow-velocity vector and the second flow-velocity vector is low. The predetermined threshold value used may be the same value in the regions, or may be different values.

The difference value between the first flow-velocity vector and the second flow-velocity vector is a value indicating the degree of difference or the degree of similarity between the first flow-velocity vector and the second flow-velocity vector. The difference value used may be any value so long as the value indicates the degree of difference or the degree of similarity.

For example, the difference value used may be a value calculated based on the magnitude of a difference vector between the first flow-velocity vector and the second flow-velocity vector. In detail, for example, the magnitude of the difference vector between the first flow-velocity vector and the second flow-velocity vector may be used as the difference value, as indicated in Expression (1) below.

[Expression 1]

$$D = |v_d| = |v_1 - v_2| \cdots (1)$$

In this case, D denotes the difference value, v1 denotes the first flow-velocity vector, v2 denotes the second flow-velocity vector, and vd denotes the difference vector between the first flow-velocity vector and the second flow-velocity vector.

The difference value in Expression (1) indicated above may be normalized by using the first flow-velocity vector and/or the second flow-velocity vector. For example, as indicated in Expression (2) below, a ratio of the magnitude of the difference vector to the magnitude of the first flow-velocity vector may be used as the difference value.

[Expression 2]

$$D = \frac{|v_d|}{|v_1|} \cdots (2)$$

Alternatively, for example, as indicated in Expression (3) below, a ratio of the magnitude of the difference vector to the magnitude of the second flow-velocity vector may be used as the difference value.

[Expression 3]

$$D = \frac{|v_d|}{|v_2|} \cdots (3)$$

As another alternative, for example, as indicated in Expression (4) below, a ratio of the magnitude of the difference vector to an average of the magnitude of the first flow-velocity vector and the magnitude of the second flow-velocity vector may be used as the difference value.

[Expression 4]

$$D = \frac{2|v_d|}{|v_1| + |v_2|} \cdots (4)$$

As another alternative, for example, the difference value used may be a value calculated based on a difference between the magnitude of the first flow-velocity vector and the magnitude of the second flow-velocity vector. In detail, for example, as indicated in Expression (5) below, a root-mean-square value of the difference between the magnitude of the first flow-velocity vector and the magnitude of the second flow-velocity vector may be used as the difference value.

[Expression 5]

$$D = \sqrt{(|v_1| - |v_2|)^2} \cdots (5)$$

Furthermore, similar to the difference value in Expression (1) indicated above, the difference value in Expression (5) indicated above may be normalized by using the first flow-velocity vector and/or the second flow-velocity vector. For example, as indicated in Expression (6) below, a ratio of the root-mean-square value of the difference between the magnitude of the first flow-velocity vector and the magnitude of the second flow-velocity vector may be used as the difference value.

[Expression 6]

$$D = \frac{\sqrt{(|v_1| - |v_2|)^2}}{|v_1|} \cdots (6)$$

As another alternative, for example, as indicated in Expression (7) below, a ratio of the root-mean-square value of the difference between the magnitude of the first flow-velocity vector and the magnitude of the second flow-velocity vector to the magnitude of the second flow-velocity vector may be used as the difference value.

[Expression 7]

$$D = \frac{\sqrt{(|v_1| - |v_2|)^2}}{|v_2|} \cdots (7)$$

As another alternative, for example, as indicated in Expression (8) below, a ratio of the root-mean-square value of the difference between the magnitude of the first flow-velocity vector and the magnitude of the second flow-velocity vector to the average of the magnitude of the first flow-velocity vector and the magnitude of the second flow-velocity vector may be used as the difference value.

[Expression 8]

$$D = \frac{2\sqrt{(|v_1| - |v_2|)^2}}{|v_1| + |v_2|} \cdots (8)$$

In Expression (5) to Expression (8) indicated above, an absolute value may be used in place of the root-mean-square value. In other words, an absolute difference value between the magnitude of the first flow-velocity vector and the magnitude of the second flow-velocity vector may be used.

The generating unit 123 generates and outputs at least one of first flow information and second flow information based on the first flow-velocity distribution and the second flow-velocity distribution if the difference value is larger than or equal to the predetermined threshold value with respect to each of the regions within the predetermined space. For example, the first flow information may include the first flow-velocity vector in a region having the difference value larger than or equal to the predetermined threshold value, and the second flow information may include the second flow-velocity vector in a region having the difference value larger than or equal to the predetermined threshold value. Alternatively, for example, the first flow information may include at least one of a PMV and an age of air corresponding to the first flow-velocity distribution in a region having the difference value larger than or equal to the predetermined threshold value, and the second flow information may include at least one of a PMV and an age of air corresponding to the second flow-velocity distribution in a region having the difference value larger than or equal to the predetermined threshold value.

The acquiring unit 121, the comparing unit 122, and the generating unit 123 used may be, for example, a processor (not illustrated) and a memory (not illustrated) having instructions stored therein. Alternatively, the acquiring unit 121, the comparing unit 122, and the generating unit 123 used may be a dedicated electronic circuit. The dedicated electronic circuit may be a single semiconductor integrated circuit, or may be separate electronic circuits among the acquiring unit 121, the comparing unit 122, and the generating unit 123.

The communication unit 124 transmits information to the terminal device 110 and/or the display device 130 and receives information from the terminal device 110 and/or the display device 130 via the communication network. In detail, the communication unit 124 receives information about the first boundary condition and the second boundary condition from the terminal device 110, and transmits the first flow information and the second flow information to the display device 130. The communication unit 124 used may be, for example, a wired communication circuit and/or a wireless communication circuit, but is not limited thereto. The server device 120 may be realized by using software processing. In this case, when the processor executes software stored in a transitory storage medium (e.g., a memory), the processor and a peripheral device implement the function of the server device 120. For example, when the processor executes the software stored in the transitory storage medium, the processor and the peripheral device perform processing related to the server device 120 including a process from step S121 to step S125 described in Fig. 2.

[1.3. Configuration of Display Device 130]

The display device 130 displays the first flow information and the second flow information in a comparable manner. The display device 130 used may be, for example, a head mounted display (HMD), but is not limited thereto. For example, the display device 130 used may be a flat display placed on a desk or may be a projector that projects an image onto a screen.

As illustrated in Fig. 1, the display device 130 includes a display unit 131 and a communication unit 132. The components included in the display device 130 will be described below.

The display unit 131 displays the first flow information and the second flow information received from the server device 120. For example, the display unit 131 displays the first flow information and the second flow information in different colors. In detail, the display unit 131 may use mixed reality (MR) to display, in a fused fashion, a physical object within the predetermined space and virtual objects expressing the first flow information and the second flow information.

Alternatively, the display unit 131 may display the first flow information and the second flow information by using different graphics (e.g., shapes and/or sizes) or different lines (i.e., thicknesses and/or line types).

The communication unit 132 transmits information to the terminal device 110 and/or the server device 120 and receives information from the terminal device 110 and/or the server device 120 via the communication network. In detail, the communication unit 132 receives the first flow information and the second flow information from the server device 120. The communication unit 132 used may be, for example, a wired communication circuit and/or a wireless communication circuit, but is not limited thereto.

The terminal device 110, the server device 120, and the display device 130 are separate devices in Fig. 1, but are not limited thereto. For example, the display device 130 may be contained within the terminal device 110. In this case, the display unit 113 of the terminal device 110 may have the function of the display unit 131 of the display device 130, and the communication unit 114 of the terminal device 110 may have the function of the communication unit 132 of the display device 130. Furthermore, for example, the server device 120 may be contained within the terminal device 110. In this case, the control unit 112 of the terminal device 110 may have the functions of the acquiring unit 121, the comparing unit 122, and the generating unit 123 of the server device 120.

[2. Operation of Information Processing System 100]

Next, the operation of the information processing system 100 having the above-described configuration will be described with reference to Figs. 2 to 9. Fig. 2 is a sequence diagram illustrating information processing according to the embodiment.

[Step S111: Input of First Boundary Condition]

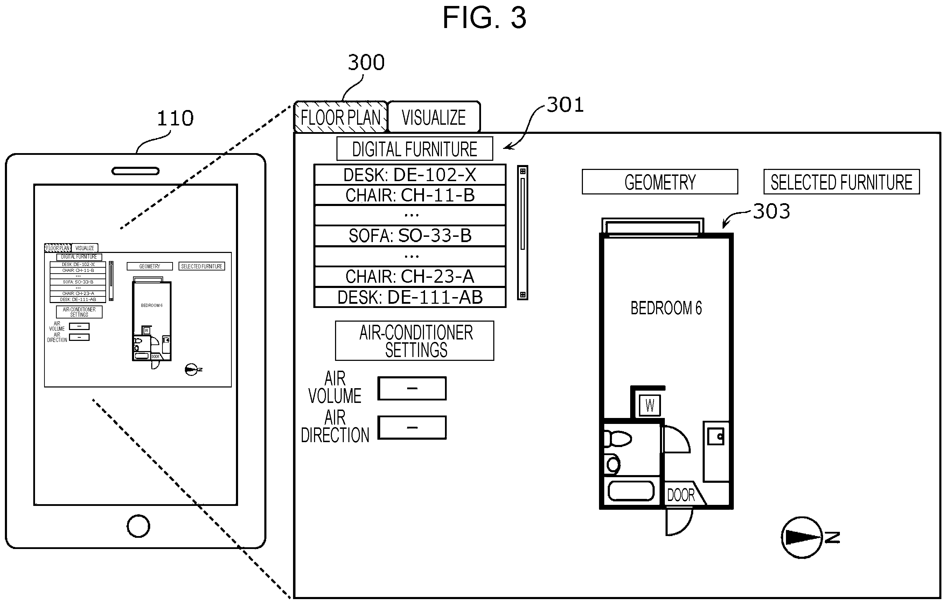

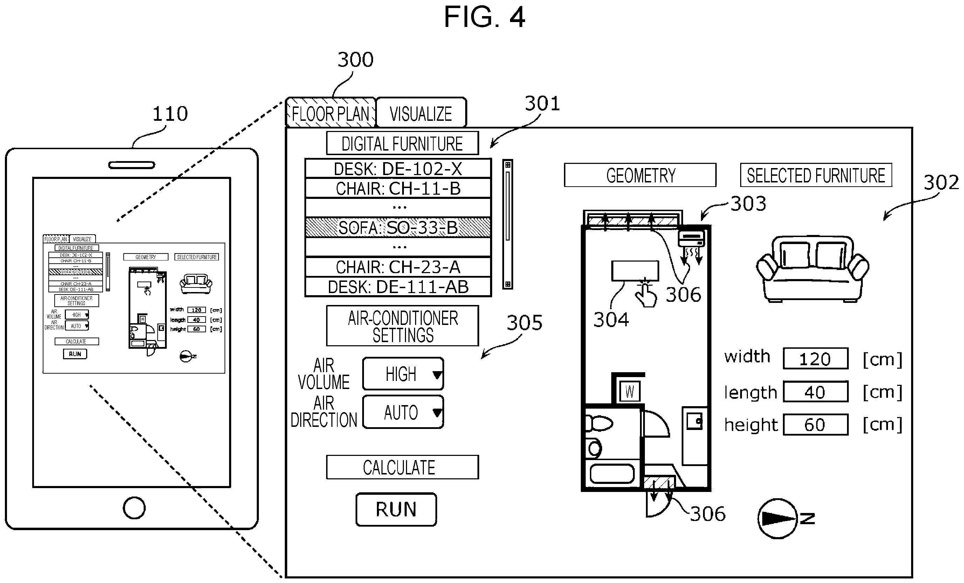

The input unit 111 of the terminal device 110 receives, from the user, input of the first boundary condition for performing the numerical analysis related to the flow of the fluid within the predetermined space. In detail, the input unit 111 receives input of the first boundary condition via a condition input screen used for setting a boundary condition for a space where airflow within a building is to be analyzed. An example of the condition input screen will be described here with reference to Figs. 3 and 4.

Figs. 3 and 4 each illustrate an example of the condition input screen according to the embodiment. In the example in Figs. 3 and 4, a tablet computer is used as the terminal device 110, and it is assumed that the predetermined space is a room inside a residential home and that the fluid is air.

In Figs. 3 and 4, a floor plan tab 300 is selected, and information in the floor plan tab 300 is displayed. For example, a floor plan 303 is displayed based on drawing information, such as three-dimensional CAD (computer-aided design) data. In this case, the position of a doorway of a room, the position of a ventilation port, and the position of a window are set, and moreover, the flow rates at these positions are set. The first boundary condition may include the set information described above.

In this case, it is necessary to designate the open/closed statuses of the door and the window of the room. A "closed" status may be used as an initial value (i.e., a default value) for the open/closed status of each of the door and the window of the room. In this case, the user can change the open/closed status of each of the door and the window of the room to an "open" status via the GUI. The first boundary condition may include the designated information described above.

Furthermore, since indoor air is to flow out from the ventilation port at a fixed rate, it is necessary to set the flow rate. As a default value for the flow rate in the ventilation port, a value derived from a set value, such as 0.3 ACPH (air change per hour), may be used. In this case, the user may change the flow rate in the ventilation port from the default value via the GUI. The first boundary condition may include the set information described above.

Furthermore, the position of an object (e.g., an air-conditioning device, a desk, or a sofa) that may have an effect on the airflow within the room is set. The position of an air conditioner can often be estimated from the floor plan of the room. Thus, the position of the air conditioner may be set automatically based on floor-plan information. However, it is difficult to estimate the position of an industrial air conditioner to be installed in an office or a store from the floor plan of the room. Therefore, the position of an air conditioner in, for example, an office or a store may be set manually by the user. The first boundary condition may include the set information described above.

In the settings of the shape and size of an object, an electronic information list (referred to as "digital catalog" hereinafter) of commercially-available furniture or household electric appliance can be used. The user can select identification information of the object from the list via the GUI, so as to set the shape and size of the object. The first boundary condition may include the set information described above.

In Fig. 3, for example, product-number information of furniture, such as a desk, a chair, and a sofa, is displayed in a selectable manner on a list 301. When the user selects an option "sofa SO-33-B", object information 302 about a sofa is displayed, as illustrated in Fig. 4. The object information 302 includes an actual image and size (i.e., the width, length, and height) of the selected sofa.

The position of an object may be designated using a coordinate value within the room, or may be set by disposing an object graphic 304 in the floor plan 303. In this case, the user can set the position of the object more readily by performing an operation interactively on the screen. In the example in Fig. 4, the user taps on a position in the floor plan 303 on the touch-sensitive display, so that the object graphic 304 indicating the selected sofa is disposed at the tapped position (i.e., the position of a finger icon).

In an air-conditioning device, such as an air conditioner or an air cleaner, it is necessary to set, for example, the flow rate required in an airflow analysis. In the example in Fig. 4, operation modes, such as the air volume and the air direction, are set in air-conditioner settings 305. The air direction may be displayed in the floor plan in accordance with the set operation mode. In the example in Fig. 4, arrows 306 indicating the air directions of the air-conditioning device, the window, and the doorway of the room are displayed in the floor plan 303. With the set air directions being displayed in this manner, the user can readily ascertain the currently-set air directions. The first boundary condition may include the set information described above.

When the geometry and the flow rate are completely set, the communication unit 114 of the terminal device 110 transmits the information about the set first boundary condition to the server device 120. In the example in Fig. 4, the information about the first boundary condition is transmitted by tapping on a "RUN" button.

[Step S121: Calculation of First Flow-Velocity Distribution]

The communication unit 124 of the server device 120 receives the information about the first boundary condition required for an airflow analysis from the terminal device 110. The acquiring unit 121 acquires a first flow-velocity distribution by performing an airflow analysis in the predetermined space based on the received information about the first boundary condition.

In detail, the acquiring unit 121 first generates a mesh based on drawing information included in the information about the first boundary condition. The mesh may have a shape required for the analysis and may be, for example, a triangular mesh, a rectangular mesh, or a cubic mesh. Although spatial resolution is required for generating the mesh, the spatial resolution may be set automatically from the balance between a calculation resource that can be used in a calculation and the execution time required for the analysis. This can enhance the user-friendliness of the system. Needless to say, the user may manually set the spatial resolution. After the mesh is generated, the acquiring unit 121 sets boundary conditions for the air-conditioning device and the doorway of the room based on the information about the first boundary condition received from the terminal device 110.

When the mesh is generated and the boundary conditions are set, the acquiring unit 121 performs an airflow analysis. In this case, it is necessary to select between a calculation of non-steady flow and a calculation of steady flow. However, in non-steady flow, the flow-velocity distribution may change into a completely different one from time point to time point due to the effect of, for example, the position of an object within the predetermined space, and it is difficult to make a comparison between flow-velocity distributions. Therefore, in this embodiment, the acquiring unit 121 selects the calculation of a flow field in a steady state. Calculating a flow field in a steady state not only facilitates a comparison between plans but also eliminates the need to calculate the state at every time point, whereby the execution time required for the analysis can be shortened.

For the airflow analysis, a Navier-Stokes solver based on the finite-element method or the finite-volume method may be used, or an algorithm highly compatible with a parallel calculation, such as the lattice Boltzmann method, may be used. By using the lattice Boltzmann method, if the acquiring unit 121 is capable of using a multicore or many-core processor, the calculation time can be significantly shortened by using a parallel calculation.

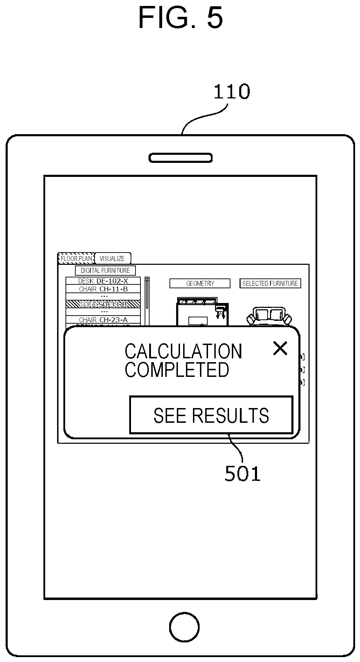

After the flow field in the steady state is calculated, the communication unit 124 transmits notification information indicating that the calculation is completed to the terminal device 110. In this case, the terminal device 110 may display the notification information. Fig. 5 illustrates an example of display of a calculation completion notification according to the embodiment.

[Step S112: Input of Visualization Request]

When the input unit 111 of the terminal device 110 receives the calculation completion notification from the server device 120, the terminal device 110 receives input for visualizing the airflow based on the calculation result. For example, the user can make a request for visualizing the airflow by pressing a button 501 in Fig. 5. If the input of the visualization request is received, the communication unit 114 transmits the visualization request to the server device 120.

[Step S122: Generation and Output of Flow Information]

The generating unit 123 of the server device 120 performs visualization of the airflow upon receiving the visualization request from the terminal device 110. For example, the generating unit 123 superimposes flow-velocity vectors in the respective regions within the predetermined space onto a geometry image. In this case, the flow-velocity vectors do not have to be superimposed in all the regions of the mesh used in the airflow analysis. For example, of all the regions, the flow-velocity vectors in regions extracted at an equal distance may be superimposed.
Alternatively, the graphics of the furniture and the air-conditioning device disposed within the predetermined space may be superimposed onto the geometry image. Accordingly, in addition to readily ascertaining the calculation conditions based on which the airflow analysis is performed, the user can also intuitively ascertain the occupying percentage and the position of each object in the room. Although flow-velocity vectors are visualized in this embodiment, other physical quantities derived from the flow-velocity vectors may be visualized. For example, an age of air and/or PMV serving as a scalar quantity may be visualized. In this case, instead of an arrow, a mark having a size and/or a color according to the magnitude of the scalar quantity may be superimposed on the geometry image.
The communication unit 124 transmits, to the display device 130, the first flow information including the geometry image having the flow-velocity vectors, the furniture, and the air-conditioning device superimposed thereon.

[Step S131: Display]

The communication unit 132 of the display device 130 receives, from the server device 120, the first flow information including the geometry image having, for example, the flow-velocity vectors superimposed thereon. Then, the display unit 131 displays an image based on the received first flow information.
Furthermore, for example, if the display device 130 is an HMD, the display unit 131 may use MR to display virtual objects indicating the flow-velocity vectors and physical objects in the real world in a fused fashion.

This enables not only realistic airflow visualization but also display of flow-velocity vectors within the visual field of the user in accordance with information about the position and orientation of the user.

[Step S113: Input of Second Boundary Condition]

The input unit 111 of the terminal device 110 receives, from the user, input of the second boundary condition different from the first boundary condition. In detail, the input unit 111 receives the input of the second boundary condition, in which, for example, an object disposed within the predetermined space, the position of the object, the air volume, or the air direction is different from that in the first boundary condition, via the same GUI as that used in the input of the first boundary condition. Since the details of this input are similar to the input of the first boundary condition (S111), a description thereof will be omitted.

[Step S123: Calculation of Second Flow-Velocity Distribution]

The communication unit 124 of the server device 120 receives the information about the second boundary condition required for an airflow analysis from the terminal device 110. The acquiring unit 121 acquires a second flow-velocity distribution by performing an airflow analysis in the predetermined space based on the received information about the second boundary condition. Since the details of this calculation are similar to the calculation of the first flow-velocity distribution (S121), a description thereof will be omitted.

[Step S114: Input of Visualization Request]

When the input unit 111 of the terminal device 110 receives a calculation completion notification from the server device 120, the input unit 111 receives input for visualizing the two calculation results in a comparable manner. If the input of the visualization request is received, the communication unit 114 transmits the visualization request to the server device 120.

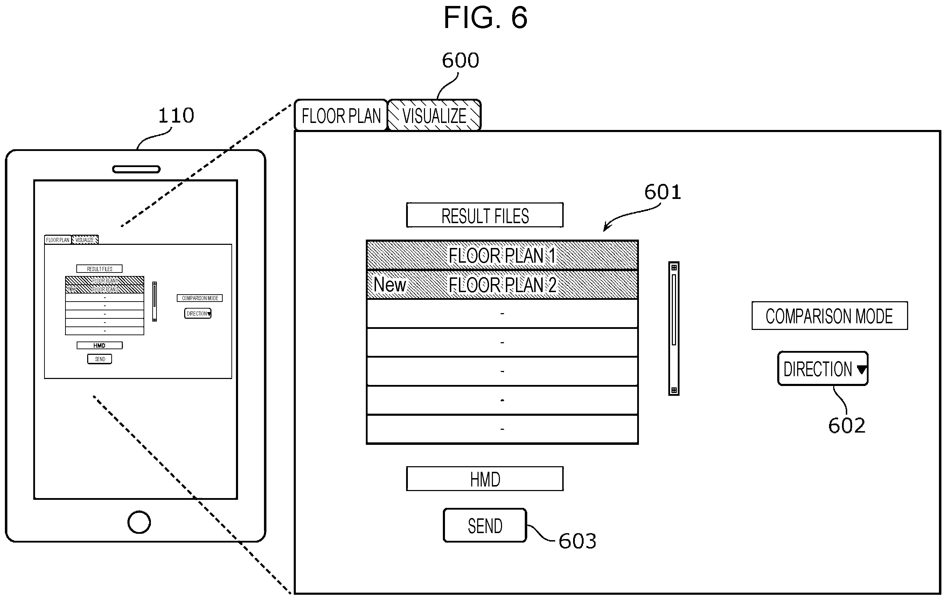

Fig. 6 illustrates an example of a visualization request screen according to the embodiment. In Fig. 6, a visualize tab 600 is selected, and information in the visualize tab 600 is displayed. The user selects calculation results to be compared and displayed from a list 601, and selects a comparison mode from a drop-down list 602. In Fig. 6, options "floor plan 1" and "floor plan 2" are selected as the calculation results, and an option "direction" is selected as the comparison mode from between options "direction" and "magnitude". When a send button 603 is pressed in this state, a visualization request is transmitted to the server device 120. The details of the comparison modes will be described with reference to processing performed by the server device 120.

[Step S124: Comparison]

If the visualization of a single airflow analysis result is directly applied to the visualization of airflow analysis results, it is difficult to ascertain a local difference between the airflow analysis results. For example, if the airflow analysis results are simply displayed side by side, the user has to visually compare the airflow analysis results and search for where a difference exists.

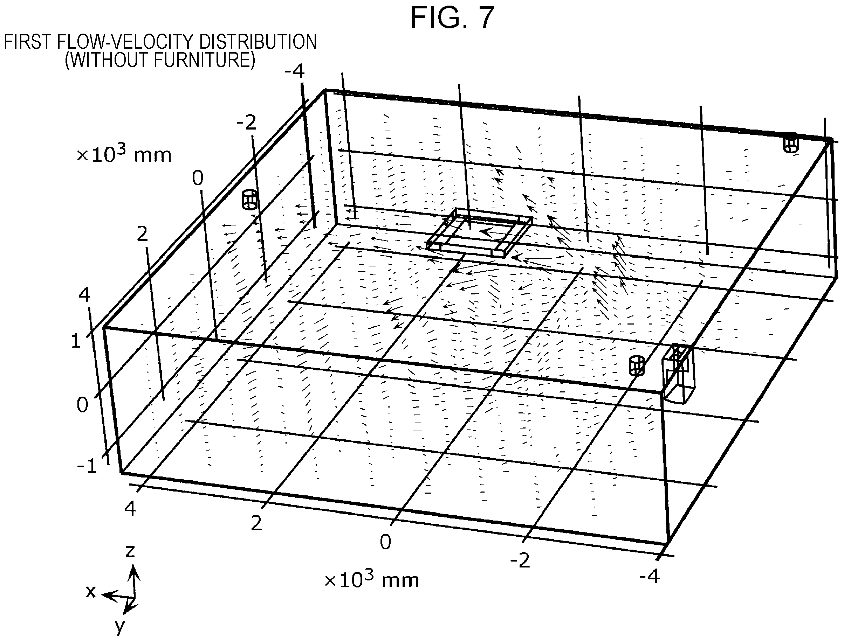

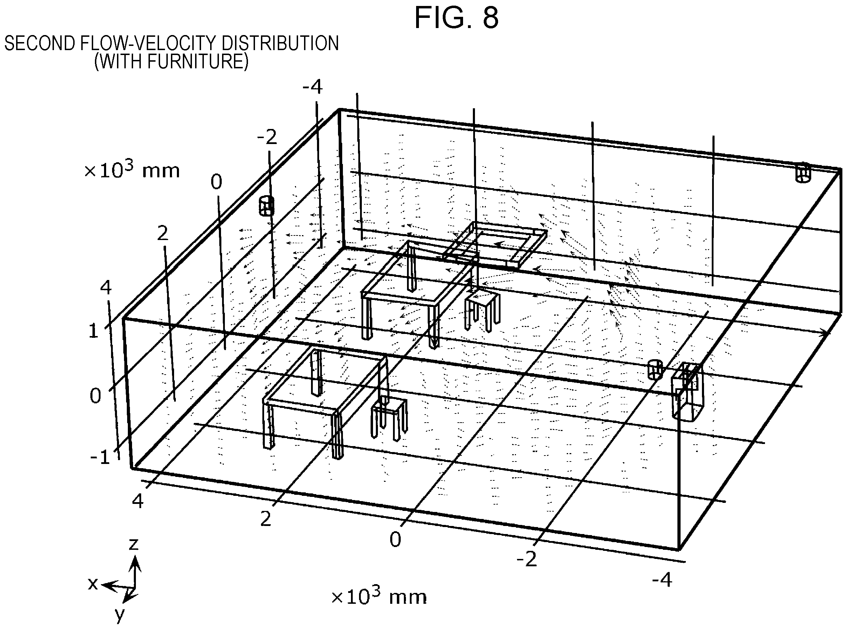

Fig. 7 illustrates an example of display of the first flow-velocity distribution according to the embodiment. Fig. 8 illustrates an example of display of the second flow-velocity distribution according to the embodiment. The first flow-velocity distribution in Fig. 7 is a flow-velocity distribution calculated by using the first boundary condition in which a desk is not set at the center of the room. The second flow-velocity distribution in Fig. 8 is a flow-velocity distribution calculated by using the second boundary condition in which desks are set at the center of the room. In Figs. 7 and 8, each arrow indicates a flow-velocity vector in each region within the room, and has a thickness and a length that are proportional to the magnitude of the flow-velocity vector.

Figs. 7 and 8 each indicate flow-velocity vectors in all calculated regions and have a large amount of information. Therefore, even when two flow-velocity distributions are displayed side by side, it is difficult for the user to compare the two flow-velocity distributions. Furthermore, although it is ascertainable that the two flow-velocity distributions are different from each other, it is difficult to specifically ascertain where and how much the flow velocity has changed. Therefore, it is difficult for the user to determine which boundary condition is to be used from this simple side-by-side display of the two flow-velocity distributions.

In this embodiment, the information processing system 100 has a comparison mode. Accordingly, the information processing system 100 can display the difference between the flow-velocity distributions in a more comprehensible manner.

In detail, if the comparing unit 122 of the server device 120 receives a visualization request in the comparison mode "direction" from the terminal device 110, the comparing unit 122 compares flow-velocity vectors in each region between the two flow-velocity distributions (i.e., the first flow-velocity distribution and the second flow-velocity distribution) corresponding to the two selected calculation results. In more detail, the comparing unit 122 first calculates a difference value between flow-velocity vectors in each region within the predetermined space by using any one of Expression (1) to Expression (4) indicated above. Then, the comparing unit 122 compares the calculated difference value with a predetermined threshold value.

If the difference value is calculated by using Expression (1), the predetermined threshold value used may be, for example, 1 [mm/s]. If the difference value is calculated by using any one of Expression (2) to Expression (4), the predetermined threshold value used may be, for example, 0.5 [mm/s]. The predetermined threshold value is not limited to these values and may be set in advance empirically and/or experimentally, or may be set arbitrarily by the user.

If the calculated difference value is larger than or equal to the predetermined threshold value, the comparing unit 122 extracts the relevant region as a region (referred to as "variation region" hereinafter) with a large variation in flow velocity. In contrast, if the calculated difference value is smaller than the predetermined threshold value, the comparing unit 122 does not extract the relevant region as a variation region.

If the comparing unit 122 receives a visualization request in the other comparison mode "magnitude", the comparing unit 122 calculates a difference value between flow-velocity vectors in each region by using any one of Expression (5) to Expression (8) indicated above. If the calculated difference value is larger than or equal to the predetermined threshold value, the comparing unit 122 extracts the relevant region as a variation region.

[Step S125: Generation and Output of Flow Information]

The generating unit 123 of the server device 120 superimposes the flow-velocity vectors in each extracted variation region onto the geometry image to generate first flow information and second flow information. In other words, the first flow information and the second flow information each include information about the flow-velocity vectors in the variation regions of the regions. In contrast, each of the first flow information and the second flow information does not include information about flow-velocity vectors in regions other than the variation regions of the regions.

[Step S132: Display]

The communication unit 132 of the display device 130 receives, from the server device 120, the first flow information and the second flow information each including the geometry image having, for example, the flow-velocity vectors superimposed thereon. Then, the display unit 131 displays an image based on the received first flow information and the received second flow information. In detail, the display unit 131 displays the flow-velocity distributions in the variation regions of the regions within the predetermined space.

With the flow-velocity distributions being displayed in this manner, the flow-velocity vectors can be displayed by extracting regions with large variations in the calculation results, so that the user can readily and intuitively ascertain the difference between the flow-velocity distributions. In this case, when the two flow-velocity distributions are to be displayed, the flow-velocity vectors may be displayed differently for each flow-velocity distribution. For example, either of the first flow-velocity vector and the second flow-velocity vector may be displayed with a red arrow, whereas the other may be displayed with a blue arrow, so that the flow-velocity vectors of the two plans can be readily distinguished from each other.

It is not necessary to generate and display both the first flow information and the second flow information. In other words, either of the first flow information and the second flow information may be generated and displayed.

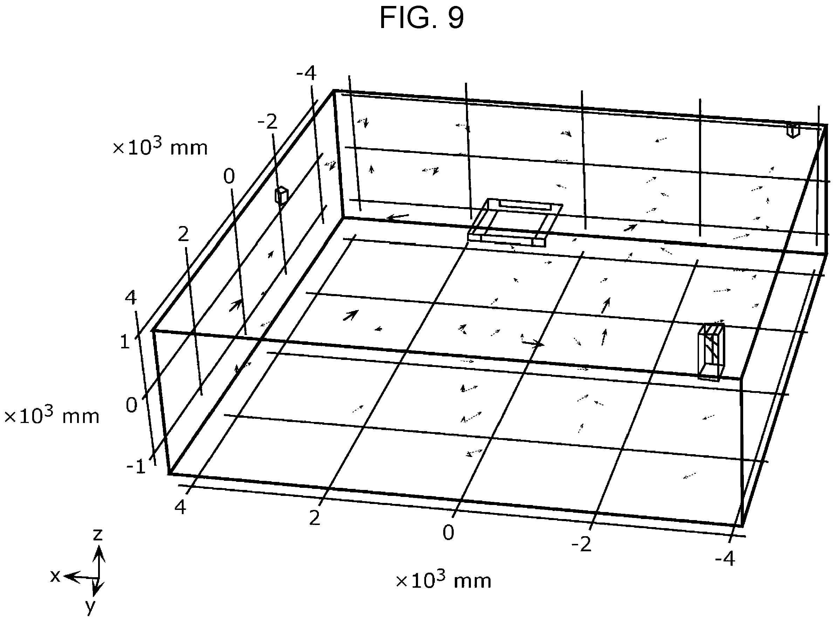

Fig. 9 illustrates an example of display of flow-velocity distributions in the comparison mode according to this embodiment. In Fig. 9, a solid arrow indicates a first flow-velocity vector, and a dotted arrow indicates a second flow-velocity vector. It is apparent from Fig. 9 that, in a region at the positive side (i.e., the left side in Fig. 9) of the X axis of the room, a small number of arrows are displayed since there are hardly any variations in the two flow-velocity distributions. In contrast, in a region at the negative side (i.e., the right side in Fig. 9) of the X axis of the room, a large number of arrows are displayed since there are large variations in the flow-velocity distributions due to the effect of a desk. Furthermore, since the flow is stagnated by the desk in a region below the desk, it is intuitively ascertainable how the flow has greatly changed.

[3. Effects]

Accordingly, the server device 120 according to this embodiment includes the acquiring unit 121 that acquires a first flow-velocity distribution and a second flow-velocity distribution, calculated by using different boundary conditions, of a fluid within a predetermined space, the comparing unit 122 that compares a difference value between a first flow-velocity vector included in the first flow-velocity distribution and a second flow-velocity vector included in the second flow-velocity distribution with a predetermined threshold value with respect to each of regions within the predetermined space, and the generating unit 123 that generates and outputs at least one of first flow information and second flow information based on the first flow-velocity distribution and the second flow-velocity distribution if the difference value is larger than or equal to the predetermined threshold value with respect to each of the regions within the predetermined space.

Furthermore, the information processing system 100 according to this embodiment includes the above-described server device 120 and the display device 130 that displays the first flow information and the second flow information output from the server device 120.

Accordingly, the first flow information and the second flow information of a region where the difference value between the first flow-velocity vector and the second flow-velocity vector is larger than or equal to the predetermined threshold value can be output. In other words, output of the first flow information and the second flow information of a region where the difference value is smaller than the threshold value can be omitted. As a result, flow information about a region with a large variation can be output, and a change in local flow in the calculation results can be output in an intuitively comprehensible manner.

Furthermore, for example, in the server device 120 according to this embodiment, the first flow information may include a first flow-velocity vector in a region having the difference value larger than or equal to the predetermined threshold value, and the second flow information may include a second flow-velocity vector in a region having the difference value larger than or equal to the predetermined threshold value.

Accordingly, a flow-velocity vector in a region with a large variation in the two flow-velocity distributions can be output, and a change in local fluid flow in the calculation results can be output in an intuitively comprehensible manner.

Furthermore, for example, in the server device 120 according to this embodiment, the first flow information may include at least one of a PMV and an age of air, derived based on the first flow-velocity distribution, in a region having the difference value larger than or equal to the predetermined threshold value, and the second flow information may include at least one of a PMV and an age of air, derived based on the second flow-velocity distribution, in a region having the difference value larger than or equal to the predetermined threshold value.

Accordingly, the PMV and/or the age of air in a region with a large variation in the two flow-velocity distributions can be output, and a change in local flow in the calculation results can be output in an intuitively comprehensible manner.

Furthermore, for example, in the server device 120 according to this embodiment, the comparing unit 122 may calculate the difference value based on the magnitude of a difference vector between the first flow-velocity vector and the second flow-velocity vector.

Accordingly, the difference value can be calculated not only based on the difference in magnitude between the first flow-velocity vector and the second flow-velocity vector but also based on the difference in direction, so that a region with a large variation in the two flow-velocity distributions can be accurately extracted.

Furthermore, for example, in the server device 120 according to this embodiment, the comparing unit 122 may calculate the difference value based on a difference between the magnitude of the first flow-velocity vector and the magnitude of the second flow-velocity vector.

Accordingly, the difference value can be calculated based on the difference between the magnitude of the first flow-velocity vector and the magnitude of the second flow-velocity vector, so that a region with a large variation in the two flow-velocity distributions can be easily extracted.

Furthermore, for example, in the information processing system 100 according to this embodiment, the display device 130 may display the first flow information and the second flow information in different colors.

Accordingly, the first flow information and the second flow information can be displayed in different colors, so that a change in local flow in the calculation results can be displayed in an intuitively comprehensible manner.

(First Modification)

Next, a first modification will be described. This modification is mainly different from the above embodiment in that a time sequence of each of the first flow-velocity distribution and the second flow-velocity distribution is acquired in accordance with a calculation of non-steady flow and that each of the first flow-velocity distribution and the second flow-velocity distribution may be displayed for each time point of the time sequence. This modification will be described below while focusing on the differences from the above embodiment.

The configuration of the information processing system 100 according to this modification will be described with reference to Fig. 1 since the configuration is similar to that of the information processing system 100 according to the above embodiment.

The acquiring unit 121 according to this modification acquires a time sequence of each of the first flow-velocity distribution and the second flow-velocity distribution, calculated by using different boundary conditions, of the fluid within the predetermined space. A time sequence of a flow-velocity distribution refers to a series of flow-velocity distribution values calculated over time.

For example, the acquiring unit 121 can acquire a time sequence of the first flow-velocity distribution of the fluid within the predetermined space by performing a non-steady calculation based on a numerical fluid analysis using the first boundary condition. Furthermore, for example, the acquiring unit 121 can acquire a time sequence of the second flow-velocity distribution of the fluid within the predetermined space by performing a non-steady calculation based on a numerical fluid analysis using the second boundary condition different from the first boundary condition.

The comparing unit 122 according to this modification sets a threshold value based on the first flow-velocity distribution and the second flow-velocity distribution with respect to each time point of the time sequence. Then, the comparing unit 122 uses the set threshold value as the predetermined threshold value to perform a process similar to that in the above embodiment for each time point of the time sequence, thereby generating and outputting the time sequence of at least one of the first flow information and the second flow information.

The method for setting the threshold value for each time point is not particularly limited. For example, the threshold value for each time point may be set based on the number of regions where the difference value is larger than or equal to the threshold value. In detail, for example, the comparing unit 122 calculates a difference value between the first flow-velocity vector and the second flow-velocity vector in each region within the predetermined space for each time point. Then, the comparing unit 122 uses the threshold values sequentially to calculate the number of regions having the difference value larger than or equal to the threshold value. Of the threshold values, the comparing unit 122 can set, as the predetermined threshold value, a minimal threshold value at which the calculated number of regions is smaller than a predetermined number. For example, in a case where the number of regions having the difference value larger than or equal to threshold values of 1, 2, 3, 4, and 5 are 100, 70, 55, 45, and 40, respectively, if the predetermined number is 60, the minimal threshold value of 4 at which the number of regions is smaller than the predetermined number is set as the predetermined threshold value. The predetermined number may be set in advance empirically and/or experimentally, or may be set arbitrarily by the user.

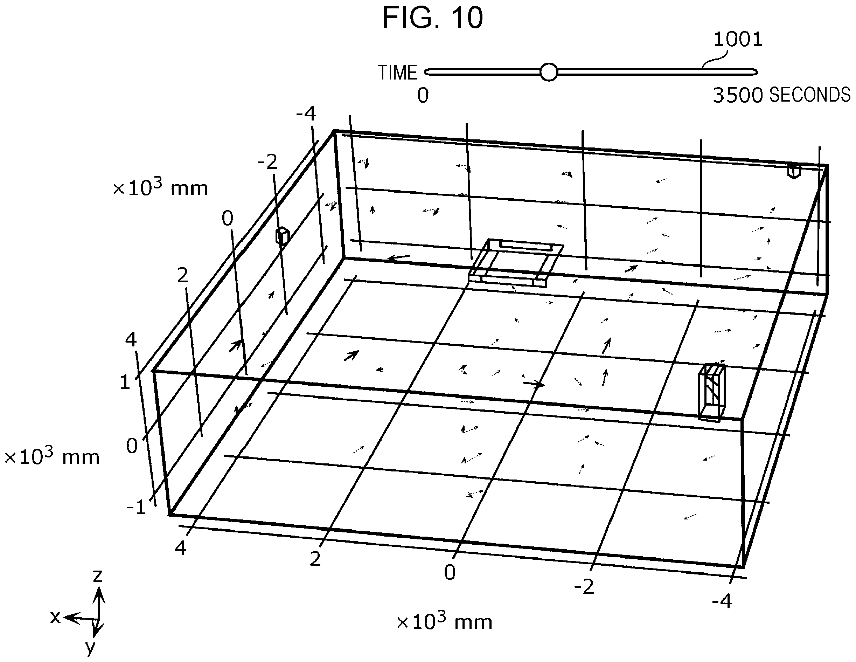

The display of the first flow information and the second flow information in the comparison mode according to this modification will now be described. Fig. 10 illustrates an example of display of flow-velocity distributions in the comparison mode according to the first modification. In Fig. 10, a slider 1001 serving as a GUI component for changing the time point of a flow-velocity distribution to be displayed is displayed. By horizontally moving an indicator of the slider 1001, the flow-velocity distribution at the time point corresponding to the horizontal position of the indicator can be displayed.

The slider 1001 in Fig. 10 is an example of a GUI component for changing the time point, but the GUI component is not limited thereto. For example, a text box used for inputting a numerical value indicating the time point may be displayed. Alternatively, a button for automatically advancing the time point in the form of video playback may be displayed. In this case, buttons for performing special playback operations, such as fastforwarding, rewinding, and pausing, may be displayed.

Accordingly, in the server device 120 according to this modification, the acquiring unit 121 acquires a time sequence of each of the first flow-velocity distribution and the second flow-velocity distribution, and the comparing unit 122 sets a first predetermined threshold value based on the first flow-velocity distribution and the second flow-velocity distribution with respect to each time point of the time sequence.

Accordingly, a flow-velocity distribution can be acquired in a time sequence, and a threshold value can be set for each time point. Therefore, for example, by using the server device 120 for outputting a calculation result of non-steady flow, variations in the amount of flow information to be output from time point to time point can be suppressed, thereby enhancing the viewability in the display of flow information that varies from time point to time point.

Furthermore, for example, in the server device 120 according to this modification, the comparing unit 122 may set the first predetermined threshold value based on the number of regions where the difference value is larger than or equal to the first predetermined threshold value with respect to each time point of the time sequence.

Accordingly, variations in the number of regions where the difference value is larger than or equal to the first predetermined threshold value can be suppressed, so that flow information can be output more stably.

(Second Modification)

Next, a second modification will be described. This modification is mainly different from the above embodiment in that region information indicating a region with a high age of air is generated. This modification will be described below while focusing on the differences from the above embodiment.

The configuration of the information processing system 100 according to this modification will be described with reference to Fig. 1 since the configuration is similar to that of the information processing system 100 according to the above embodiment.

The acquiring unit 121 according to this modification acquires an age-of-air distribution, calculated by using the second boundary condition, of the fluid within the predetermined space. In detail, for example, the acquiring unit 121 performs a numerical fluid analysis by using the second boundary condition for the predetermined space, so as to acquire the age-of-air distribution of the fluid in each region within the predetermined space.

The comparing unit 122 according to this modification compares the age of air based on the second boundary condition with a predetermined threshold value with respect to each of the regions within the predetermined space. This predetermined threshold value is an example of a second predetermined threshold value and is a value used for determining that the age of air is high. The predetermined threshold value used may be the same value in the regions, or may be different values.

If the age of air is higher than or equal to the predetermined threshold value with respect to each of the regions within the predetermined space, the generating unit 123 according to this modification generates and outputs information about the relevant region. In other words, the generating unit 123 generates and outputs region information indicating a region where the age of air is higher than or equal to the predetermined threshold value.

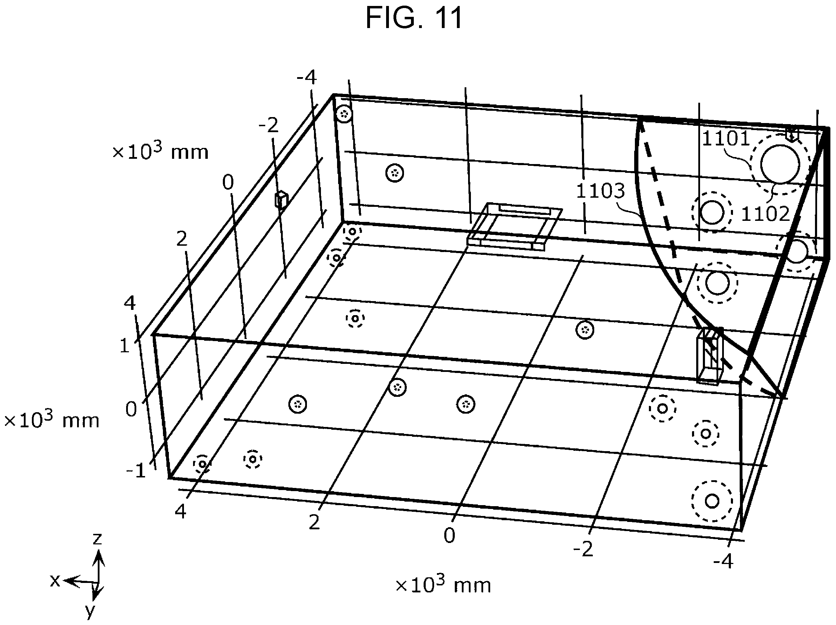

The display of the first flow information and the second flow information in the comparison mode according to this modification will now be described. Fig. 11 illustrates an example of display of flow information and region information in the comparison mode according to the second modification. In Fig. 11, a first age-of-air and a second age-of-air are displayed as the first flow information and the second flow information, respectively.

A first age-of-air 1101 indicates the age of air calculated based on the first boundary condition. The first age-of-air 1101 is indicated with a dashed circle having a size corresponding to the value of the age of air. A second age-of-air 1102 indicates the age of air calculated based on the second boundary condition. The second age-of-air 1102 is indicated with a solid circle having a size corresponding to the value of the age of air. Region information 1103 indicates a region having the second age-of-air higher than or equal to the predetermined threshold value. The region information 1103 indicates a regional boundary by using a thick solid line.

The region information 1103 in Fig. 11 corresponds to an example of a technique for displaying region information indicating a region where the age of air is higher than or equal to the predetermined threshold value, but is not limited thereto. For example, the region where the age of air is higher than or equal to the predetermined threshold value may be given a freely-chosen color.

Accordingly, in the server device 120 according to this modification, the comparing unit 122 compares the age of air based on the second flow-velocity distribution with the second predetermined threshold value with respect to each of the regions within the predetermined space, and the generating unit 123 generates and outputs region information indicating a region where the age of air is higher than or equal to the second predetermined threshold value.

Accordingly, a region where the air is stagnated within the predetermined space can be output, so that more useful information can be provided to the user.

(Third Modification)

Next, a third modification will be described. This modification is mainly different from the above embodiment in that pieces of flow information about regions are grouped into a single piece of information. This modification will be described below while focusing on the differences from the above embodiment.

The configuration of the information processing system 100 according to this modification will be described with reference to Fig. 1 since the configuration is similar to that of the information processing system 100 according to the above embodiment.

Similar to the above embodiment, the generating unit 123 according to this modification generates at least one of the first flow information and the second flow information based on the first flow-velocity distribution and the second flow-velocity distribution if the difference value is larger than or equal to the predetermined threshold value with respect to each of the regions within the predetermined space. In this case, the generating unit 123 can group pieces of flow information about two or more regions included in regions where the difference value is larger than or equal to the predetermined threshold value into a single piece of flow information and output the single piece of flow information. In other words, the generating unit 123 can group flow information about a first region having the difference value larger than or equal to the predetermined threshold value and flow information about a second region different from the first region and having the difference value larger than or equal to the predetermined threshold value into a single piece of flow information and output the single piece of flow information. For example, the generating unit 123 may output an average vector of a flow-velocity vector in the first region and a flow-velocity vector in the second region as flow information about a single region obtained as a result of grouping the first region and the second region together.

The grouping of pieces of information implies a reduction in the amount of information in the pieces of information. For example, the pieces of information can be grouped together by replacing the pieces of information with the summary statistic thereof.

To determine which pieces of flow information about regions are to be grouped together, a generic clustering technique may be used, but the technique is not particularly limited. For example, the generating unit 123 may cluster regions where the difference value is larger than or equal to the predetermined threshold value based on a difference value in the distance and/or the flow-velocity vector between the regions, and may group together flow-velocity vectors in two or more regions classified into the same cluster. In other words, the generating unit 123 may group together the flow information about the first region and the flow information about the second region in accordance with the distance between the first region and the second region and the difference between the flow information about the first region and the flow information about the second region.

Accordingly, in the server device 120 according to this modification, the generating unit 123 groups second flow information about the first region included in two or more regions where the difference value is larger than or equal to the first predetermined threshold value and second flow information about the second region different from the first region and included in the two or more regions into a single piece of second flow information and outputs the single piece of second flow information.

Accordingly, redundant pieces of information can be grouped together, and a change in local flow in the calculation results can be output in an intuitively comprehensible manner.

Furthermore, for example, in the server device 120 according to this modification, the generating unit 123 may group together the second flow information about the first region and the second flow information about the second region in accordance with the distance between the first region and the second region and the difference between the second flow information about the first region and the second flow information about the second region.

Accordingly, the pieces of second flow information about regions that are spatially and highly similar to each other with respect to the second flow information can be grouped together, thereby suppressing grouping of pieces of characteristic second flow information and facilitating grouping of pieces of second flow information that are highly similar to each other.

(Fourth Modification)

Next, a fourth modification will be described. This modification is mainly different from the above embodiment in that, of the flow-velocity distributions calculated by using different boundary conditions, a flow-velocity distribution that satisfies a predetermined condition is used as the second flow-velocity distribution. This modification will be described below while focusing on the differences from the above embodiment.

The configuration of the information processing system 100 according to this modification will be described with reference to Fig. 1 since the configuration is similar to that of the information processing system 100 according to the above embodiment.

The generating unit 123 according to this modification determines whether or not a variation between the first flow-velocity distribution and the second flow-velocity distribution satisfies the predetermined condition in a predetermined region within the predetermined space. The predetermined region used may be, for example, a region of interest set by the user. The predetermined condition used is not particularly limited, and may be, for example, a condition indicating that the variation is large.

The variation between the first flow-velocity distribution and the second flow-velocity distribution can be expressed by using the aforementioned difference value between the first flow-velocity vector and the second flow-velocity vector. Alternatively, the variation between the first flow-velocity distribution and the second flow-velocity distribution may be expressed by using a PMV difference value and/or an age-of-air difference value. In this case, the predetermined condition used may be such that the difference value is larger than a third predetermined threshold value.

If it is determined that the variation between the first flow-velocity distribution and the second flow-velocity distribution satisfies the predetermined condition, the generating unit 123 outputs the first flow information and/or the second flow information. In contrast, if it is determined that the variation between the first flow-velocity distribution and the second flow-velocity distribution does not satisfy the predetermined condition, the generating unit 123 does not have to output the first flow information and/or the second flow information.

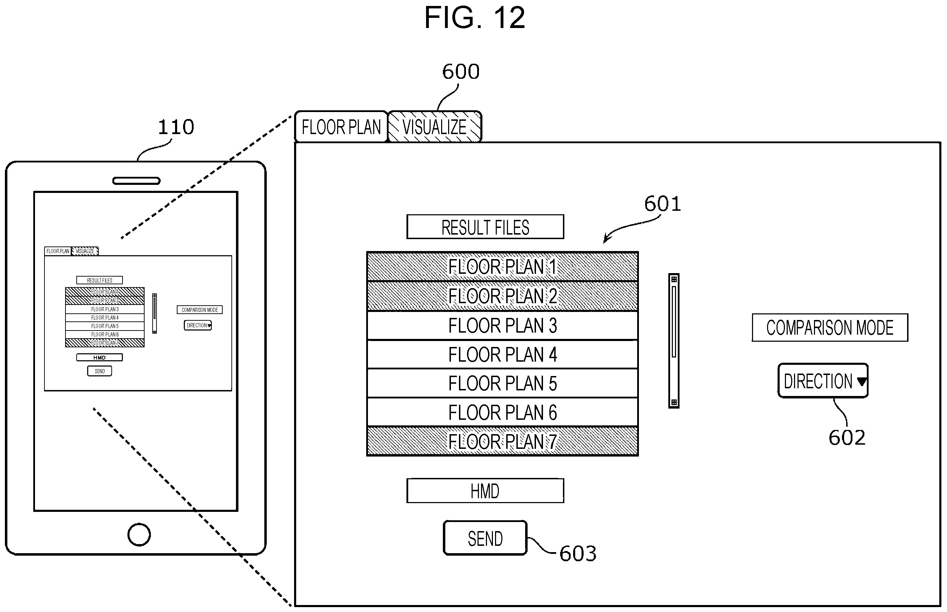

The visualization request screen according to this modification will now be described. Fig. 12 illustrates an example of the visualization request screen according to the fourth modification. In Fig. 12, hatched areas within the list 601 indicate that they are selectable, whereas non-hatched areas indicate that they are not selectable.

In the list 601 of calculation results, floor plans 1, 2, and 7 of floor plans 1 to 7 are selectable, whereas floor plans 3 to 6 are not selectable. This is because it is determined that the variation between the first flow-velocity distribution and the second flow-velocity distribution satisfies the predetermined condition in the floor plans 1, 2, and 7, whereas it is determined that the variation between the first flow-velocity distribution and the second flow-velocity distribution does not satisfy the predetermined condition in the floor plans 3 to 6.

Accordingly, in the server device 120 according to this modification, the generating unit 123 further determines whether or not the variation between the first flow-velocity distribution and the second flow-velocity distribution satisfies the predetermined condition in a predetermined region within the predetermined space, and outputs at least one of the first flow information and the second flow information if it is determined that the variation between the first flow-velocity distribution and the second flow-velocity distribution satisfies the predetermined condition.

Accordingly, a calculation result in which there is a desirable variation in a predetermined region can be output, thereby enhancing user-friendliness.

(Other Modifications)

Although the information processing device, the information processing system, and the information processing method according to one or more aspects of the present disclosure have been described above based on the embodiment and modifications thereof, the present disclosure is not limited to this embodiment. An embodiment achieved by applying various modifications to the above embodiment and conceivable by a skilled person or an embodiment configured by combining components in different embodiments and modifications thereof may be included within the scope of one or more aspects of the present disclosure so long as the embodiment does not depart from the scope of the present disclosure.

For example, in the above embodiment, although the first flow-velocity vector and the second flow-velocity vector are output as the first flow information and the second flow information in the comparison mode, the information to be output is not limited thereto. For example, a difference vector between the first flow-velocity vector and the second flow-velocity vector may be output in addition to the first flow-velocity vector and the second flow-velocity vector.

In other words, if the difference value is larger than or equal to the predetermined threshold value with respect to each of the regions within the predetermined space, the generating unit 123 of the server device 120 may further generate and output the difference vector between the first flow-velocity vector and the second flow-velocity vector as third flow information. Accordingly, for example, the difference vector can be output in addition to the first flow-velocity vector and the second flow-velocity vector, so that a change in local flow in the calculation results can be output in an intuitively comprehensible manner.

The GUI illustrated in the above embodiment is an example and is not limited thereto. For example, in Figs. 3 and 4, a list may be displayed for each type of air-conditioning device and furniture. Moreover, the arrangement of GUI objects within the screen may be changed in a more user-friendly fashion.

If a comparison is to be performed between plans, it is often conceivable that an airflow analysis is first performed by arranging a specific piece of furniture or the air-conditioning device (plan A), the airflow analysis is then performed again after changing the position of the specific piece of furniture (plan B), and the plan A and the plan B are compared with each other.

In this case, for example, when the position of the furniture in the plan B is to be set in the floor plan 303 in Fig. 4, the position of the furniture or the air-conditioning device in the previous plan A may be displayed together with the position of the furniture or the air-conditioning device in the current plan B. Accordingly, when performing the condition inputting process, the user can easily recognize where and how the change has been made.

Furthermore, when the first flow information and the second flow information are to be displayed in the comparison mode, the furniture set in the first boundary condition and the furniture set in the second boundary condition may both be displayed together. Moreover, the furniture set in the first boundary condition and the furniture set in the second boundary condition may be displayed in a switchable manner. An object set in each boundary condition is displayed in the comparison mode in this manner, so that a change of boundary conditions, in addition to a change in the flow, can be displayed in a more comprehensible manner.

Although an airflow analysis within a residential home is described as an example in the above embodiment, the space and the fluid to which the present disclosure is applied are not limited to a residential home and air. For example, the predetermined space may be an office or a store, or may be an in-vehicle space. Furthermore, the fluid may be a gas other than the air, or may be a liquid.

Industrial Applicability

The present disclosure can be used as an information processing system for displaying airflow analysis results calculated by using different boundary conditions.

Reference Signs List

| 100 | information processing system |
| 110 | terminal device |
| 111 | input unit |
| 112 | control unit |
| 113, 131 | display unit |
| 114, 124, 132 | communication unit |
| 120 | server device |
| 121 | acquiring unit |
| 122 | comparing unit |
| 123 | generating unit |
| 130 | display device |
| 300 | floor plan tab |
| 301 | list |
| 302 | object information |
| 303 | floor plan |
| 304 | object graphic |
| 305 | air-conditioner settings |
| 306 | arrow |
| 501 | button |
| 600 | visualize tab |
| 601 | list |
| 602 | drop-down list |
| 603 | send button |

## Claims

1. An information processing device comprising:

an acquiring unit that acquires a first flow-velocity distribution and a second flow-velocity distribution of a fluid within a predetermined space, the first flow-velocity distribution and the second flow-velocity distribution being calculated by using different boundary conditions;
a comparing unit that compares a difference value between a first flow-velocity vector included in the first flow-velocity distribution and a second flow-velocity vector included in the second flow-velocity distribution with a first predetermined threshold value with respect to each of regions within the predetermined space; and
a generating unit that generates and outputs at least one of first flow information and second flow information based on the first flow-velocity distribution and the second flow-velocity distribution if the difference value is larger than or equal to the first predetermined threshold value with respect to each of the regions within the predetermined space.

2. The information processing device according to Claim 1,

wherein the first flow information includes a first flow-velocity vector in a region having the difference value larger than or equal to the first predetermined threshold value, and
wherein the second flow information includes a second flow-velocity vector in a region having the difference value larger than or equal to the first predetermined threshold value.

3. The information processing device according to Claim 1,

wherein the first flow information includes at least one of a predicted mean vote (PMV) and an age of air in a region having the difference value larger than or equal to the first predetermined threshold value, the at least one of the predicted mean vote and the age of air being derived based on the first flow-velocity distribution, and
wherein the second flow information includes at least one of a PMV and an age of air in a region having the difference value larger than or equal to the first predetermined threshold value, the at least one of the predicted mean vote and the age of air being derived based on the second flow-velocity distribution.

4. The information processing device according to any one of Claims 1 to 3,
wherein the comparing unit calculates the difference value based on magnitude of a difference vector between the first flow-velocity vector and the second flow-velocity vector.

5. The information processing device according to any one of Claims 1 to 3,
wherein the comparing unit calculates the difference value based on a difference between magnitude of the first flow-velocity vector and magnitude of the second flow-velocity vector.

6. The information processing device according to any one of Claims 1 to 5,
wherein if the difference value is larger than or equal to the first predetermined threshold value with respect to each of the regions within the predetermined space, the generating unit further generates and outputs a difference vector between the first flow-velocity vector and the second flow-velocity vector as third flow information.

7. The information processing device according to any one of Claims 1 to 6,

wherein the acquiring unit acquires a time sequence of each of the first flow-velocity distribution and the second flow-velocity distribution, and
wherein the comparing unit further sets the first predetermined threshold value based on the first flow-velocity distribution and the second flow-velocity distribution with respect to each time point of the time sequence.

8. The information processing device according to Claim 7,
wherein the comparing unit sets the first predetermined threshold value based on a number of regions where the difference value is larger than or equal to the first predetermined threshold value with respect to each time point of the time sequence.

9. The information processing device according to any one of Claims 1 to 8,

wherein the comparing unit further compares an age of air based on the second flow-velocity distribution with respect to each of the regions within the predetermined space with a second predetermined threshold value, and
wherein the generating unit further generates and outputs region information indicating a region where the age of air is larger than or equal to the second predetermined threshold value.

10. The information processing device according to any one of Claims 1 to 9,
wherein the generating unit groups second flow information about a first region and second flow information about a second region into a single piece of second flow information and outputs the single piece of second flow information, the first region being included in two or more regions where the difference value is larger than or equal to the first predetermined threshold value, the second region being included in the two or more regions and being different from the first region.

11. The information processing device according to Claim 10,
wherein the generating unit groups together the second flow information about the first region and the second flow information about the second region in accordance with a distance between the first region and the second region and a difference between the second flow information about the first region and the second flow information about the second region.

12. The information processing device according to any one of Claims 1 to 11,

wherein the generating unit further determines whether or not a variation between the first flow-velocity distribution and the second flow-velocity distribution satisfies a predetermined condition in a predetermined region within the predetermined space, and
wherein if the generating unit determines that the variation between the first flow-velocity distribution and the second flow-velocity distribution satisfies the predetermined condition, the generating unit outputs at least one of the first flow information and the second flow information.

13. An information processing system comprising:

the information processing device according to any one of Claims 1 to 12; and
a display device that displays the first flow information and the second flow information output from the information processing device.

14. The information processing system according to Claim 13,
wherein the display device displays the first flow information and the second flow information in different colors.

15. An information processing method comprising:

acquiring a first flow-velocity distribution and a second flow-velocity distribution of a fluid within a predetermined space, the first flow-velocity distribution and the second flow-velocity distribution being calculated by using different boundary conditions;
comparing a difference value between a first flow-velocity vector included in the first flow-velocity distribution and a second flow-velocity vector included in the second flow-velocity distribution with a predetermined threshold value with respect to each of regions within the predetermined space; and
generating and outputting at least one of first flow information and second flow information based on the first flow-velocity distribution and the second flow-velocity distribution if the difference value is larger than or equal to the predetermined threshold value with respect to each of the regions within the predetermined space.

16. An information processing method comprising:

acquiring a first flow-velocity distribution within a space including regions and a second flow-velocity distribution within the space, the first flow-velocity distribution being calculated by using a first boundary condition, the second flow-velocity distribution being calculated by using a second boundary condition different from the first boundary condition; and
outputting information indicating a first flow-velocity vector or information indicating a second flow-velocity vector in correspondence with information indicating a region included in the regions if a difference value between the first flow-velocity vector corresponding to the region and the second flow-velocity vector corresponding to the region is larger than or equal to a threshold value,

wherein the first flow-velocity distribution includes the first flow-velocity vector, and

wherein the second flow-velocity distribution includes the second flow-velocity vector.

# FIG. 1

100

120

## SERVER DEVICE

121

| ACQUIRING UNIT |

122

| COMPARING UNIT |

| GENERATING UNIT |

| COMMUNICATION UNIT |

123

124

110

## TERMINAL DEVICE

111

| INPUT UNIT |

112

| CONTROL UNIT |

| DISPLAY UNIT |

| COMMUNICATION UNIT |

113

114

130

## DISPLAY DEVICE

131

| DISPLAY UNIT |

| COMMUNICATION UNIT |

132

FIG. 2

110
TERMINAL DEVICE

120
SERVER DEVICE

130
DISPLAY DEVICE

S111

RECEIVE INPUT OF
FIRST BOUNDARY CONDITION

FIRST BOUNDARY CONDITION →

CALCULATE FIRST FLOW-
VELOCITY DISTRIBUTION
S121

CALCULATION
COMPLETION NOTIFICATION

S112

RECEIVE INPUT OF VISUALIZATION
REQUEST IN SINGLE CONDITION

VISUALIZATION REQUEST →
POSITION-ORIENTATION
INFORMATION

GENERATE AND OUTPUT
FLOW INFORMATION
S122

FIRST FLOW INFORMATION →
S131

S113    SECOND BOUNDARY CONDITION →

DISPLAY

RECEIVE INPUT OF
SECOND BOUNDARY CONDITION

CALCULATE SECOND FLOW-
VELOCITY DISTRIBUTION
S123

CALCULATION
COMPLETION NOTIFICATION

S114

RECEIVE INPUT OF VISUALIZATION
REQUEST IN BOUNDARY CONDITIONS

VISUALIZATION REQUEST →
POSITION-ORIENTATION
INFORMATION

COMPARE
S124

GENERATE AND OUTPUT
FLOW INFORMATION
S125

FLOW INFORMATION →
S132

DISPLAY

# FIG. 3

# FIG. 4

EP 4 083 844 A1

# FIG. 5

110

FLOOR PLAN | VISUALIZE

DIGITAL FURNITURE

DESK: DE-102-X
CHAIR: CH-11-B
...
SOFA: SO-33-B
CHAIR: CH-23-A

GEOMETRY | SELECTED FURNITURE

CALCULATION COMPLETED ✕

SEE RESULTS

501

# FIG. 6

600

FLOOR PLAN | VISUALIZE

110

601

RESULT FILES

| FLOOR PLAN 1 |
| New    FLOOR PLAN 2 |
| - |
| - |
| - |
| - |
| - |

COMPARISON MODE

DIRECTION ▼

602

HMD

SEND 603

EP 4 083 844 A1

# FIG. 7

FIRST FLOW-VELOCITY DISTRIBUTION
(WITHOUT FURNITURE)

EP 4 083 844 A1

# FIG. 8

SECOND FLOW-VELOCITY DISTRIBUTION
(WITH FURNITURE)

EP 4 083 844 A1

FIG. 9

FIG. 10

FIG. 11

EP 4 083 844 A1

FIG. 12

600

110

FLOOR PLAN | VISUALIZE

601

RESULT FILES

FLOOR PLAN 1

FLOOR PLAN 2

FLOOR PLAN 3

FLOOR PLAN 4

FLOOR PLAN 5

FLOOR PLAN 6

FLOOR PLAN 7

COMPARISON MODE

DIRECTION ▼

602

HMD

SEND

603

| | International application No. |
|---|---|
| | PCT/JP2020/043097 |

**A. CLASSIFICATION OF SUBJECT MATTER**
G06F 30/20(2020.01)i
FI: G06F17/50 612C; G06F17/50 612G

According to International Patent Classification (IPC) or to both national classification and IPC

**B. FIELDS SEARCHED**

Minimum documentation searched (classification system followed by classification symbols)
G06F30/00-30/28; F24F11/00-11/89; G16Z99/00; G06Q50/04; G06Q50/08

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
Google Scholar

**C. DOCUMENTS CONSIDERED TO BE RELEVANT**

| Category* | Citation of document, with indication, where appropriate, of the relevant passages | Relevant to claim No. |
|---|---|---|
| A | 八反田香莉 外4名，EFD/CFD 融合可視化における速度場表現の一手法，第4回データ工学と情報マネジメントに関するフォーラム論文集[online]，日本データベース学会, March 2012, pp. 1-6, [retrieved on 03 February 2021], Retrieved from the Internet <URL:https://db-event.jpn.org/deim2012/proceedings/final-pdf/c9-2.pdf>, p. 5, (HATTANDA, Kaori et al., "Fundamental Study on EFD/CFD Integrated Visualization For Vector Fields", Proceedings of the 4th forum on data engineering and information management [online], The Database Society of Japan) | 1-16 |
| A | JP 2013-003697 A (LIXIL CORPORATION) 07 January 2013 (2013-01-07) claims | 1-16 |
| A | JP 6-067631 A (HITACHI, LTD.) 11 March 1994 (1994-03-11) claims | 1-16 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 February 2021 (03.02.2021) | 16 February 2021 (16.02.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/043097

| Patent Documents referred in the Report | Publication Date | Patent Family | Publication Date |
|---|---|---|---|
| JP 2013-003697 A | 07 Jan. 2013 | (Family: none) | |
| JP 6-067631 A | 11 Mar. 1994 | (Family: none) | |

Form PCT/ISA/210 (patent family annex) (January 2015)

**REFERENCES CITED IN THE DESCRIPTION**

**Patent documents cited in the description**

- JP 2012063055 A
- JP 2013003697 A